# EUROPEAN PATENT APPLICATION

(11) **EP 1 286 285 A1**
(43) Date of publication of application: **26.02.2003**
(21) Application number: 01930135.7
(22) Date of filing: 15.05.2001
(51) Int. Cl.: G06F 17/60, G07G 1/12

(54) **AUTHENTICATION SYSTEM AND METHOD**

(30) Priority: 15.05.2000 JP 2000142419; 30.06.2000 JP 2000199668
(71) Applicant: NTT DoCoMo, Inc., Tokyo 100-6150 (JP)
(72) Inventor: NAKAJIMA, Takayuki, Yokohama-shi, Kanagawa 240-0013 (JP)
(86) International application number: JP0104018
(87) International publication number: WO01088790

(57) **Abstract**

To utilize credit, a user possesses credit card 10 and mobile station 50. Location matching server 70 detects a location of mobile station 50 which a user possesses, and a shop which accepts credit utilized by the user. If these locations do not accord, it is judged that a user at a shop possesses credit card 10 but does not possess mobile station 50, and so is not the proper owner of credit card 10.

## Description

### Technical Field

The present invention relates to an authentication system and method for authenticating a user when the user requests a transaction by utilizing credit or electronic money.

### Background Art

Credit transactions by utilizing credit cards and transfer of funds by utilizing money cards are popularly performed. A new payment settlement service by using debit cards has recently begun as well.

In using such cards, whether a user is the proper owner of the card needs to be confirmed. This confirmation generally is called user authentication; for instance, authentication methods such as to use signature and secret identification number are well known. In other words, as a user signs on a specified form when a credit card is used, a clerk confirms if the user is the proper owner by matching this signature with a signature signed beforehand on the backside of the card. Also, as a user inputs a secret identification number into an ATM (Automated Tellers Machine) terminal when a bank card is utilized, whether the user is the proper owner is confirmed by matching this secret identification number with a secret identification number pre-registered at the ATM terminal beforehand.

However, there is a problem of imposing quite a burden on a user in adopting any of above mentioned authentication methods. For instance, with regard to the authentication method by signature, a signature has to be signed whenever credit is utilized, and this is a very troublesome operation for a user. Also, even with regard to the authentication method by secret identification number, its input operation is troublesome other than the fact that a user must memorize the secret identification number.

Also, these authentication methods do not necessarily provide an ensured prevention of false utilization of a card. For instance, when someone happens to obtain a card falsely and signs a form by imitating the handwriting of the proper owner, a clerk might recognize the false signature as a proper one. Also, since a user often uses numbers indicating the birthday of oneself or monotonous consecutive numbers as a secret identification number, it would be a relatively easy task for even a false owner to guess a secret identification number.

### Disclosure of Invention

The object of the present invention is to provide an authentication system and method which both minimize inconvenience and maximize efficiency for a user. The present invention also has as its object the provision of an authentication system and method which are able to carry out highly precise and effective authentication for a user.

According to one of the embodiments of the present invention, an authentication system comprising a plurality of receiving terminals for receiving a transaction request from a user; a mobile communication network for serving a plurality of mobile communication terminals; a first location memory storage device for storing a location of each receiving terminal; a second location memory storage device for obtaining and storing a location of each mobile communication terminal; a matching device for obtaining from said first location memory storage device a location of a receiving terminal which has received a transaction request, and for obtaining from said second location memory storage device a location of a mobile communication terminal which a user who transmitted this transaction request should possess, and matching each of said locations; and an authentication device for determining a validity of said transaction request based upon a match result obtained by said matching device; is provided.

In the present invention, it is preferable that a mobile communication terminal which a user uses to transmit the transaction request is identified by way of identification information contained in said transaction request.

According to another embodiment of the present invention, an authentication system comprising a plurality of receiving terminals for receiving transaction requests by reading, from an identification card storing identification information of a user, identification information of the user;
a first location storing device for storing location information on each receiving terminal in correspondence with identification information on said each receiving terminal; a second location memory storage device which stores location information on a mobile communication terminal of each user in correspondence with identification information on said each user; location information on said receiving terminal which is read out based upon identification information on a receiving terminal which received said transaction request from said first location memory storage device as a key, location information on a mobile communication terminal which is read out based upon identification information on the user who transmitted said transaction request from said second location memory storage device as a key, a matching device for matching these; an authentication device which determines authenticity of said user based upon a match result by said matching device; is provided.

According to a further embodiment of the present invention, an authentication method which determines authenticity of a transaction request of a user who possesses a mobile communication terminal served by a mobile communication network, and comprising a step which receives a transaction request of a user at each receiving terminal; a first location finding step for finding a location of a receiving terminal which received said transaction request; a second location finding step for finding a location of a mobile communication terminal from which a user transmitted said transaction request; a matching step for matching a location of said receiving terminal found by said first location finding step with a location of said mobile communication terminal found by said second location finding step; an authentication step for determining authenticity of a transaction request based upon a result of said match; is provided.

According to an further embodiment of the present invention, an authentication method for determining authenticity of a transaction request of a user who possesses a mobile communication terminal served in a mobile communication terminal and comprising a step for receiving a transaction request by reading out identification information on this user from an ID card which stores identification information of a user at each receiving terminal; a step for reading out location information of this receiving terminal based upon identification information on a receiving terminal which received said transaction request as a key from information which is identification information on each receiving terminal stored beforeh-and in correspondence with a location information on said each receiving terminal; a step for reading out location information on a mobile communication terminal which this user should possess based upon identification information on a user who transmitted said transaction request as a key from information which is identification information on each user stored beforehand in corresponding to a location information on a mobile communication terminal; a step for matching location information on said receiving terminal which was read out with location information on said mobile communication terminal which was read out; an authentication step for determining authenticity of said user based upon a result of said matching; is provided.

According to yet another embodiment of the present invention, a program which is an authentication program for determining authenticity of a transaction request of a user who possesses a mobile communication terminal served in a mobile communication network and prompts a computer to execute a first location finding process for obtaining a location of said each receiving terminal which received said transaction request when each receiving terminal received a transaction request of a user; a second location finding process for obtaining a location of a mobile communication terminal which a user who transmitted said transaction request should possess; a matching process for matching a location of said receiving terminal obtained by said first location finding process with a location of said mobile communication terminal obtained by said second location finding process; an authentication process for determining authenticity of transaction request based upon a result of said match; is provided.

According to still further embodiment of the present invention, a program which is an authentication program for determining authenticity of a transaction request of a user who possesses a mobile communication terminal served in a mobile communication terminal and prompts a computer to execute; when each receiving terminal received a transaction request from a user, a process of obtaining identification information on said each receiving terminal and said user, and reading out location information on this receiving terminal based upon identification information on this receiving terminal which received said transaction request as a key from information which is identification information on each receiving terminal stored beforehand in correspondence with location information on said each receiving terminal; a process of reading out location information on a mobile communication terminal which this user should possess based upon identification information on a user who transmitted said transaction request as.a key from information which is identification information on each user stored beforehand in correspondence with location information on a mobile communication terminal; a process of matching location information on said receiving terminal which was read out with location information on said mobile communication terminal which was read out; an authentication process for determining authenticity of said user based upon a result of said matching; is provided.

### Brief Description of Drawings

Fig. 1 is a block diagram showing a configuration of the entire system of a first embodiment of the present invention.
Fig. 2 is a block diagram showing a configuration of a credit server of the first embodiment.
Fig. 3 is a format diagram showing an example of memory contents stored in a user database of the first embodiment.
Fig. 4 is a block diagram showing a configuration of a location matching server of the first embodiment.
Fig. 5 is a format diagram showing an example of memory contents stored in a mobile station ID database of the first embodiment.
Fig. 6 is a format diagram showing an example of memory contents stored in a location registration database of the first embodiment.
Fig. 7 is a format diagram showing an example of memory contents stored in a shop location database of the first embodiment.
Fig. 8 is a format diagram showing an example of a located zone data table of the first embodiment provided with a switching center.
Fig. 9 is a sequence diagram showing an operation of the entire system of the first embodiment.
Fig. 10 is a block diagram showing a configuration of the location matching server in an application of the first embodiment.
Fig. 11 is a sequence diagram showing an operation of the entire system in an application of the first embodiment.
Fig. 12 is a block diagram showing a configuration of a location matching server of a second embodiment of the present invention.
Fig. 13 is a sequence diagram showing an operation of an entire system of the second embodiment.
Fig. 14 is a block diagram showing a configuration of a mobile station of a third embodiment of the present invention.
Fig. 15 is a format diagram showing an example of memory contents stored in a shop location database of the third embodiment.
Fig. 16 is a sequence diagram showing an operation of the entire system of the third embodiment.
Fig. 17 is a block diagram showing a configuration of an entire system of a fourth embodiment of the present invention.
Fig. 18 is a block diagram showing a configuration of a CAT terminal of the fourth embodiment.
Fig. 19 is a sequence diagram showing an operation of an entire system of the fourth embodiment.
Fig. 20 is a block diagram showing a configuration of an entire system of a fifth embodiment of the present invention.
Fig. 21 is a block diagram showing a configuration of a mobile station of the fifth embodiment.
Fig. 22 is a block diagram showing a configuration of a money server of the fifth embodiment.
Fig. 23 is a format diagram showing an example of memory contents stored in a user database of the fifth embodiment.
Fig. 24 is a sequence diagram showing an operation of the entire system of the fifth embodiment when electronic money is issued.
Fig. 25 is a sequence diagram showing an operation of the entire system of the fifth embodiment when electronic money is utilized.
Fig. 26 is a block diagram showing a configuration of the entire system when the fifth embodiment is applied to ETC.

### Best Mode of Carrying out the Invention

### [1] Embodiment Configuration

### [1.1] First Embodiment

The first embodiment of the present invention will now be described.

### [1.1.1] First Embodiment Configuration

### (1) Configuration of Entire System

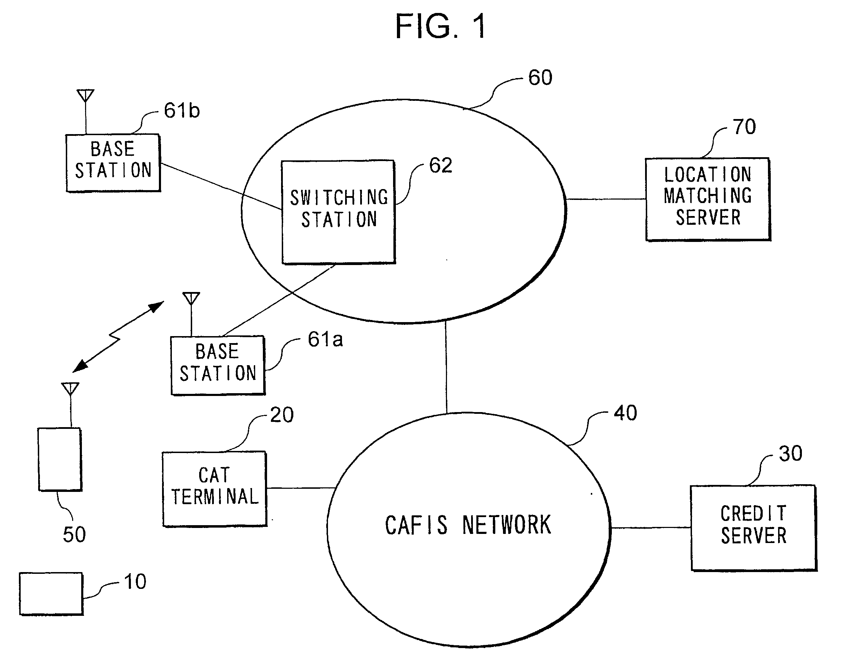

Fig. 1 is a block diagram showing a configuration of an entire system according to the first embodiment of the present invention. As shown in the figure, the system comprises a credit card 10, a CAT (Credit Authorization Terminal) terminal 20, a credit server 30, a CAFIS (Credit and Finance Information System) network 40, a mobile station 50, a mobile telephone network 60, and a location matching server 70.

Credit card 10 is a typical credit card. On the front surface, a user's name, credit number, expiration date and other relevant information is inscribed; and on the back surface, a magnetic stripe is provided for storing a credit number. The card is presented to sales clerks, for example, for use.

CAT terminal 20 is installed in a credit affiliated shop, and is connected to CAFIS network 40. CAT terminal 20 comprises a magnetic reader for reading data stored in the magnetic stripe of credit card 10; a communication unit for performing data communication with credit server 30 via CAFIS network 40; an ID memory for storing identification information (which information is referred to as "shop-ID" hereafter) for identifying a shop in which CAT terminal 20 itself is installed; an operation unit for inputting an amount of a credit card transaction or a payment method; a printer unit for printing out a transaction slip; and a control unit for controlling each of these element.

CAT terminal 20 receives a credit card transaction request from a user, forwards it to credit server 30, and receives an approval notice from credit server 30 in response to this transaction request, as appropriate.

CAFIS network 40 is a network system for interconnecting a credit company, a distribution store, and a financial institution, and relaying data communication between them.

Credit server 30 is installed in the credit company and is connected to CAFIS network 40. Credit server 30 collects data on contract details of credit cards and credit card transaction histories, and determines from the data whether the credit card transaction request transmitted from CAT terminal 20 should be approved; and transmits, to CAT terminal 20 an approval notice, as appropriate.

Mobile station 50 is a portable telephone of, for example, a PDC (Personal Digital Cellular) type, and communicates by radio through a mobile telephone network 60 with base station 61 of network 60. Mobile station 50 is equipped with an audio input/output unit for voice communication; a radio unit for radio communication with base stations of mobile telephone network 60; a display unit comprising a liquid crystal panel or the like; an operation unit for inputting data; and a micro computer for controlling each of these units.

Mobile station 50, as will be described hereafter, is used for authenticating a user's identity when the user utilizes credit. Thus, the user is required to carry mobile station 50 in addition to credit card 10.

Mobile telephone network 60 comprises base stations 61a, 61b, a switching station 62, and communication lines for connecting them; and is connected to CAFIS network 40 via a gateway device (not shown in the figures). Each of base stations 61a and 61b forms an individual radio cell, and enables radio communication to be conducted with mobile station 20 located in the cell zone. Switching station 62 serves a plurality of base stations 61a, and 61b, and performs switching of the communication lines. Switching station 62 contains a zone data table, described below, and refers to the table to perform switching of the communication lines.

Location matching server 70 is connected to mobile telephone network 60, and performs data communication with credit server 30 through network 60 and CAFIS network 40. Location matching server 70 comprises means for detecting a location of mobile station 50, and means for storing location information on shops where CAT terminal 20 is installed. In this way, a location of mobile station 50 can be determined relative to a location of such a shop (referred to as "transaction-shop" hereafter) where a user of mobile station 50 is about to perform a credit card transaction.

If the location of mobile station 50 and the location of the transaction-shop do not match, base station 50 and the transaction-shop are determined as existing at different locations. In other words, it is determined that the user at the transaction-shop is carrying credit card 10 but not mobile station 50. Accordingly, it is determined that the user is not an authorized owner of credit card 10. Conversely, if the locations of mobile station 50 and the transaction-shop do match, it is determined that the user is carrying both credit card 10 and mobile station 50, and is therefore the authorized owner of credit card 10.

As described above, in the embodiment of the present invention, user authentication is performed by, checking whether a location of mobile station 50 matches that of a transaction-shop.

### (2) Configuration of Credit Server 30

Next, the configuration of credit server 30 will be explained.

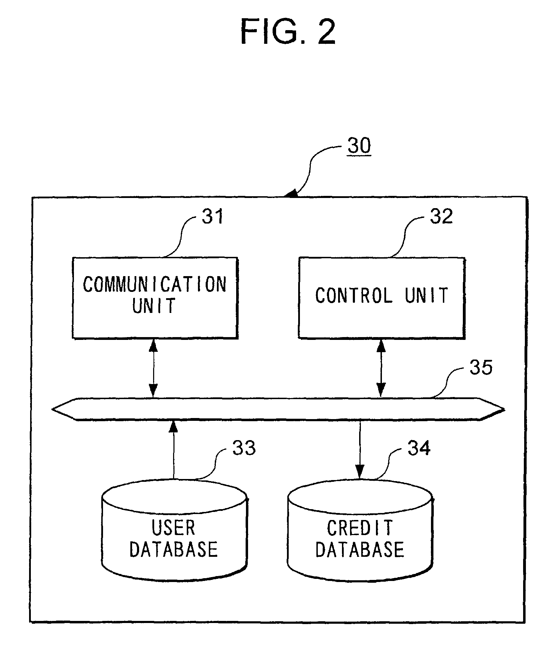

Fig. 2 is a block diagram showing the configuration of credit server 30. As shown in the figure, credit server 30 comprises a communication unit 31, a control unit 32, a user database 33, a credit database 34 and a bus 35 for interconnecting them.

Communication unit 31 comprises a connection interface to CAFIS network 40 and a communication control circuit. Communication unit 31 performs data communication with CAT terminal 20 via CAFIS network 40, and it also performs data communication with location matching server 70 via CAFIS 40 and mobile telephone network 60.

Control part 32 comprises a CPU (Central Processing Unit), ROM (Read Only Memory), and RAM (Random Access Memory); and it controls the entire credit server 30.

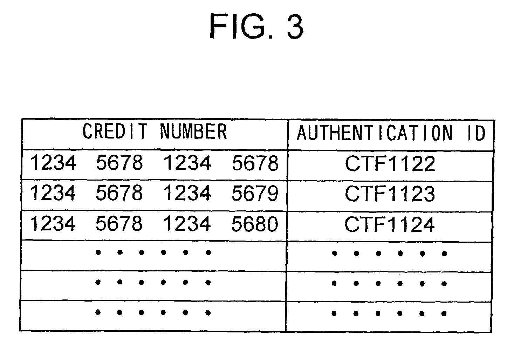

User database 33 stores each user's credit number and authentication ID, as shown in Fig.3. Additionally, various kinds of user attribute information such as a user's name, birthday, address and annual income are also stored. Authentication ID is data used by credit server 30 and the location matching server 70 for identifying a user whose location is to be checked. Since, data except for a credit number and authentication ID in the user database 33 are not particularly utilized in the present embodiment, no further description will be made of them.

A credit card transaction request is transmitted from CAT terminal 20 to credit server 30 as described above, and the transaction request is transmitted by specifying the credit number of credit card 10. Control unit 32 refers to user database 33 as it receives the transaction request and, after it receives the authentication ID which corresponds to the specified credit number, requests location matching server 70 to perform a location matching process specifying this authentication ID.

Next, the credit limit and the credit utilization history corresponding to each credit number are stored in credit database 34 shown in Fig.2. Control unit 32 refers to this credit database 34 based upon the key which is the credit number given by the CAT terminal 20 to confirm whether the amount requested for credit utilization is beyond the credit limit. Since, in this embodiment, the data stored within credit database 34 is used simply for conventional purposes, description of such purposes will be omitted.

### (3) Configuration of the Location Matching Server 70

Next, the configuration of location matching server 70 will be described.

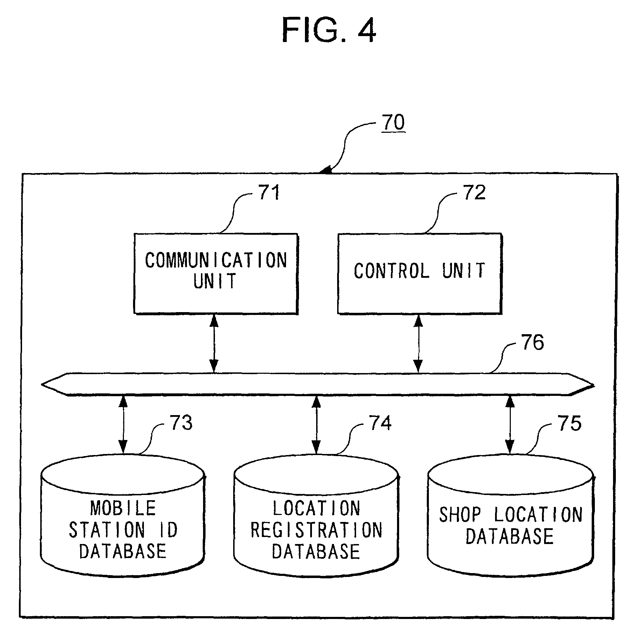

Fig.4 is a block diagram showing the configuration of the location matching server 70. As shown in the figure, location matching server 70 comprises: a communication unit 71; a control unit 72; a mobile station ID database 73; a location registration database 74; a shop location database 75; and a bus 76 for interconnecting them.

Communication unit 71 comprises a connection interface with mobile telephone network 60 and a communication control circuit, and performs data communication with credit server 30 through network 60 and with switching station 62 of network 60.

Control unit 72 comprises a CPU, ROM and RAM and controls the entire location matching server 70.

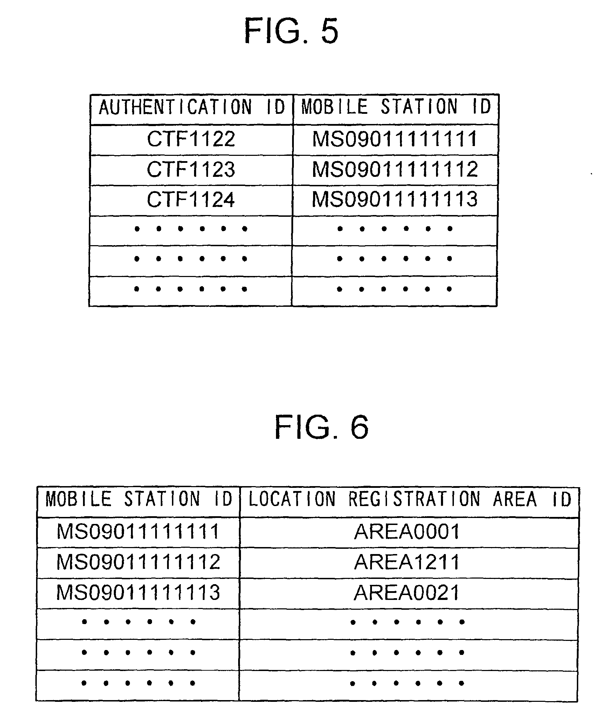

The authentication ID and the identification information (referred to as mobile station ID hereafter) of mobile station 50 which the users who correspond to this particular ID are stored within mobile station ID database 73 as denoted in Fig.5. This mobile station ID comprises the letter line "MS" followed by the telephone number of mobile station 50. For instance, the user denoted by authentication ID "CTF1122" is utilizing the mobile station 50 denoted by mobile station ID "MS09011111111" in Fig.5, and thus the telephone number of this mobile station 50 is "090-1111-1111. "

Control unit 72 obtains the mobile station ID which corresponds to the authentication ID specified by credit server 30 by referring to this mobile station ID database 73.

Next, mobile station ID and identification information regarding the location registration area within the zone of mobile station 50 denoted by this ID (referred to as location registration area ID hereafter) are stored as corresponding to each other in location registration database 74, as is shown in Fig.6. Hereafter, this mobile station ID and the data based upon location registration area ID will be referred to as location registry data.

This location registration area is an area formed by radio cells of a plurality of base stations 61a plus 61b which are served in one switching station 62, and mobile telephone network 60 simultaneously calls mobile station 50 with this location registration area being one unit. In Fig.6, for instance, mobile station 50 denoted by mobile ID "MS09011111111" exists within the location registry area denoted by location registry area ID "AREA0001".

Control unit 72 can determine if mobile station 50 denoted by the above mobile station ID exists in any location registration area as mentioned by referring to this location registration database 74 after obtaining mobile station ID which denotes the object of a location match by referring to mobile station ID database 73.

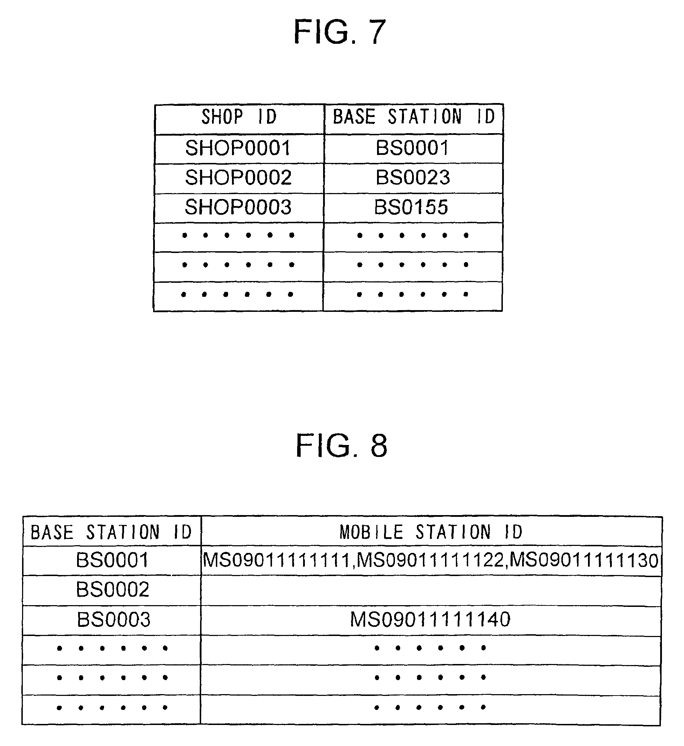

Next, shop location database 75 stores the shop ID in which CAT terminal 20 is installed and identification information of base station 61 which contains the location of the present shop within its own radio cell (referred to as base station ID hereafter) as corresponding to each other as shown in Fig.7. For instance, the shop denoted by the shop ID "SHOP0001" exists within the radio cell which the base station ID "BS0001" forms in the same figure.

Control unit 72 can determine which shop is located within the radio cell of which base station 61 by referring to this shop location database 75.

### (4) Configuration of the Area Data Table of Switching Station 62

Next, the area data table installed in switching station 62 mentioned above is explained.

Fig.8 is a format diagram showing an example of the area data table. Base station ID denoting each base station 61 and mobile station ID of mobile station 50 existing within the radio cell of this particular base station 61 are checked on the area data table as denoted in the same figure. The data formed by this base station ID and the mobile station ID is called the area data in this embodiment.

For instance, three mobile station 50s denoted by the mobile IDs "MS09011111111", "MS090111122" and "MS09011111130" exist in the radio cell of the base station ID "BS0001" denoted in the same figure.

When mobile station 50 moves among the radio cells of each base station 61, a switching process is executed for the particular communication channel of each base station 61 between mobile station 50 and switching station 62, and the area data of the table mentioned above is renewed by this process timing. Hence, which mobile station 50 exists in the radio cell of which base station 61 can be determined according to the base station ID by referring to this area data table.

### [1.1.2] Operations of the First Embodiment

Next, the operations of the first embodiment of the configuration mentioned above are explained.

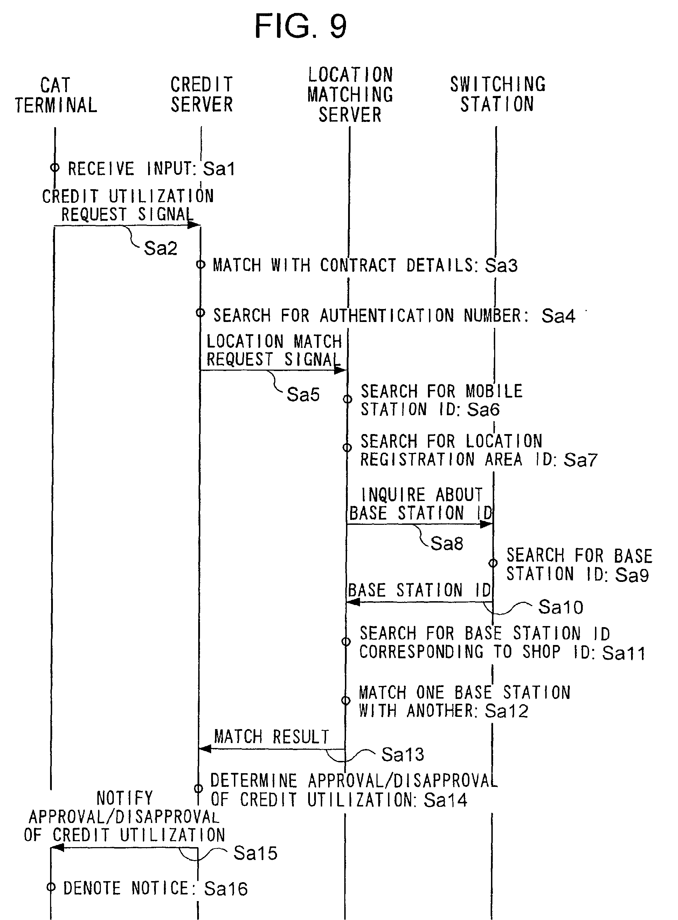

Fig.9 is a sequence diagram showing the operations of the entire system of the first embodiment. Hereafter, an example is explained by referring to the credit number "1234 5678 1234 5678" of credit card 10 which the user owns and the shop ID "SHOPOOO1" of the shop where the user executes credit shopping.

The user lets the clerk at the shop know of the intention to use credit by presenting credit card 10. The clerk inputs some details of payment methods such as the amount to be spent by credit and lump-sum/installment by operation unit of CAT terminal 20 after reading the credit number "1234 5678 1234 5678" on the magnetic stripe by sliding this particular card into the magnetic reader of CAT terminal 20 after receiving the card. The operations denoted in the same figure each begin like this, and CAT terminal 20 accepts the input operations by clerk described above (Step Sa 1).

Then CAT terminal 20 transmits the credit number read from the magnetic stripe of credit card 10 and the data the clerk inputs to credit server 30 as the credit utilization request signal along with the shop ID "SHOP0001" read from ID memory (Step Sa 2).

Credit server 30, after receiving the credit utilization request signal from CAT terminal 20, abstracts the credit number, the amount to be spent, the payment method and the shop ID which are contained in this. Then credit server 30 confirms if the content of the credit utilization request accords with the content of the credit contract by referring to credit database 34. In this way, for instance, it can be determined whether the credit contract has expired; if a credit limit is exceeded, and so on (Step Sa 3).

After these confirmations are made, credit server 30 looks up the abstracted credit number "1234 5678 1234 5678" as the key in user database 33 denoted in Fig.3 and obtains the authentication ID "CTF1122" which corresponds to this particular credit number (Step Sa 4).

Then credit server 30 transmits the location match request signal including the obtained authentication ID and the shop ID received from CAT terminal 20 to location matching server 70 (Step Sa 5).

Location matching server 70 abstracts the authentication ID contained in this particular signal and the shop ID after receiving the location match request signal which is transmitted from credit server 30. Then location matching server 70 obtains the corresponding mobile station ID "MS09011111111" by looking up the abstracted authentication ID "CTF1122" as the key in mobile station ID database 73 denoted in Fig.5 (Step Sa 6).

Then location matching server 70 obtains the corresponding location registration area ID "AREA 0001" by looking up the obtained mobile ID "MS09011111111" as the key in location registration database 74 denoted in Fig.6 (Step Sa 7). In other words, mobile station 50 denoted by the mobile station ID "MS09011111111" exists within the location registration area denoted in the location registration area ID "AREA0001. "

Then location matching server 70 searches for the base station ID of base station 61 which forms the radio cell where mobile station 50 exists by designating the mobile station ID "MS09011111111" by accessing into mobile station 62 which corresponds to the obtained location registration area ID "AREA0001" (Step Sa 8).

Switching station 62 responds to this inquiry and obtains the corresponding base station ID "BS0001" by looking up the mobile station ID "MS09011111111" designated by location matching server 70 as the key in the area data table denoted in Fig.8 (Step Sa 9), then switching station 62 transmits the obtained base station ID to location matching server 70, then location matching server 70 receives it (Step Sa 10).

Then location matching server 70 obtains the corresponding base station ID "BS0001" by looking up the shop ID "SHOP0001" received from credit server 30 in Step Sa 5 as the key in shop location database 75 denoted in Fig.7 (Step Sa 11).

Then location matching server 70 matches the base station ID "BS0001" received from switching station 62 with the base station ID "BS0001" obtained by looking up in shop location database 75 (Step Sa 12). In this case, both base station IDs are "BS0001", and the outcome of the match is "accord. "

Then location matching server 70 transmits the conclusion that this location match has ended up in accord to credit server 30 (Step Sa 13).

Credit server 30 performs user authentication based upon the result of a match which was received (Step Sa 14). Here, the user requesting the utilization of credit is recognized as a proper user, and credit can be used since the conclusion of the location match is accord.

Then credit server 30 notifies CAT terminal 20 that credit can be used (Step Sa 15). CAT terminal 20 shows this on the display to the clerk after receiving the notice (Step Sa 16), then the process terminates.

### [1.1.3] Modification Examples of the First Embodiment

In the first embodiment mentioned above, a cellular telephone like a PDC was used as mobile station 50. However, it is not so limited, and a simplified portable telephone such as a PHS (Personal Handyphone System) can be used too.

The case in which a simplified portable telephone network is used as mobile telephone network 60 by utilizing a simplified cellular telephone as mobile station 50 is explained hereafter.

Base station 61 of the simplified cellular telephone network forms a microcell which is smaller than the radio cell of cellular telephone network 60 mentioned above, and transmits the signal to indicate the base station of its own on the constant basis. On the other hand, the simplified cellular telephone calibrates the electric field strength of the signals which are transmitted from a plurality of surrounding base stations 61 and stores the electric field strength of the signals received and the base station ID contained in these particular signals as corresponding to each other. Hereafter, the electric field strength and the base station ID stored like this in the simplified cellular telephone will be referred to as electric field strength data.

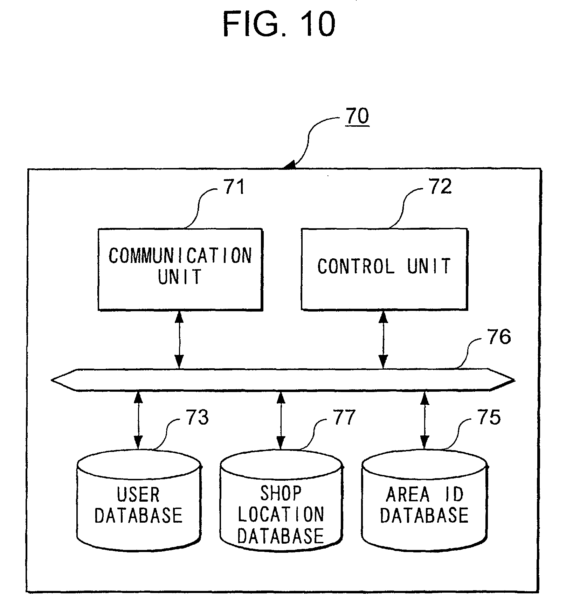

Also, location matching server 70 comprises area ID database 77 instead of location registration database 74 in Fig.4 as denoted in Fig.10. The base station ID of two of base stations 61 which are installed next to each other and the area ID of the area in between these two base stations 61 are stored as corresponding to each other within this area ID database 77. Also, the shop ID of each shop and the area ID of the area including the location of this particular sh-op are stored as corresponding to each other within shop location database 75 denoted in the same figure.

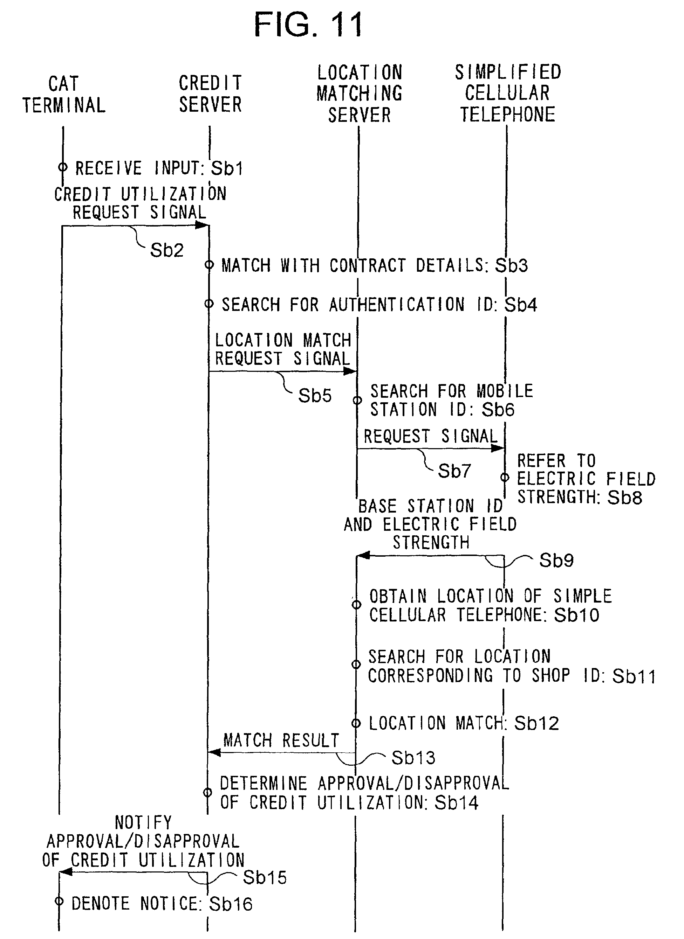

Next, the operations are explained referring to the sequence denoted in Fig. 11.

This figure is different from Fig.9 in that Steps Sb 7∼Sb 12 are executed in addition to Steps Sa 7∼Sa 12.

In other words, location matching server 70 calls the simplified cellular telephone whose location is to be checked by utilizing the control channel in Step Sb 7 and transmits the request signal to request electric field strength data stored in this simplified cellular telephone.

To call the simplified cellular telephone, a telephone number of this particular telephone is necessary for location matching server 70 during this process, but this can be determined by referring to the number following "MS" of the mobile station ID denoting the simplified cellular telephone whose location is to be checked.

Then the process moves to Step Sb 8, and the simplified cellular telephone refers to its stored electric field strength data after receiving the request signal mentioned above, and abstracts two electric field strength data from the strongest electric field strength out of this.

Then the simplified cellular telephone transmits two sets of the abstracted electric field strength data to location matching server 70 in Step Sb 9.

Location matching server 70 abstracts two base station IDs contained in two sets of the electric field strength data received from the simplified cellular telephone and obtains the corresponding area ID by looking it up as the key in area ID database 77 in Step Sb 10.

Next, location matching server 70 obtains the corresponding area ID by looking up the shop ID "SHOP0001" received from credit server 30 as the key in shop location database 75 in Step Sb 11.

Then in Step Sb 12, location matching server 70 matches the area ID denoting the location of the simplified cellular telephone which was obtained in Step Sb 10 with the area ID denoting the shop location which was obtained in Step Sb 11.

Authentication is executed by detecting the location of mobile station 50 possessed by the user and matching the location of this mobile station 50 with the shop location where credit is used. Thus, according to the first embodiment of the present invention, an authentication process can be carried out without imposing any burden on the user.

Also, in regard to the process of detecting the location of mobile station 50, the network does this independently without the user being aware; therefore, even in the case that a third person fraudulently obtains credit card 10 and uses it, authentication can be carried out without the person being aware.

### [1.2] Second Embodiment

Next, the second embodiment of the present invention is explained.

Unlike the first embodiment in which the network independently detects the location of the mobile station, in the second embodiment the location of mobile station 50 is detected by a user's operation which is the initiative in detecting the location. In other words, the location of mobile station 50 is detected while the user is aware of it.

First of all, the principle of location detection in the second embodiment is explained.

Mobile station 50 transmits the location detection request signal which requests location detection to location matching server 70 which contains its own mobile station ID, in response to the specified operations carried out by a user. This location detection request signal is received at base station 61 first after being transmitted from mobile station 50. Base station 61 forwards the received location detection request signal after adding the base station ID of its own to location matching server 70 during this process.

In addition to the mobile station ID of mobile station 50, the location detection request signal ends up containing the base station ID of base station 61 which forms the radio cell in which this particular mobile station 50 exists. Consequently, location matching server 70 can determine which mobile station 50 exists in which radio cell of base station 61, by referring to the mobile station ID and the base station ID contained in the received location detection request signal, and location detection for mobile station 50 is thus executed.

Next, the configuration of the second embodiment is explained.

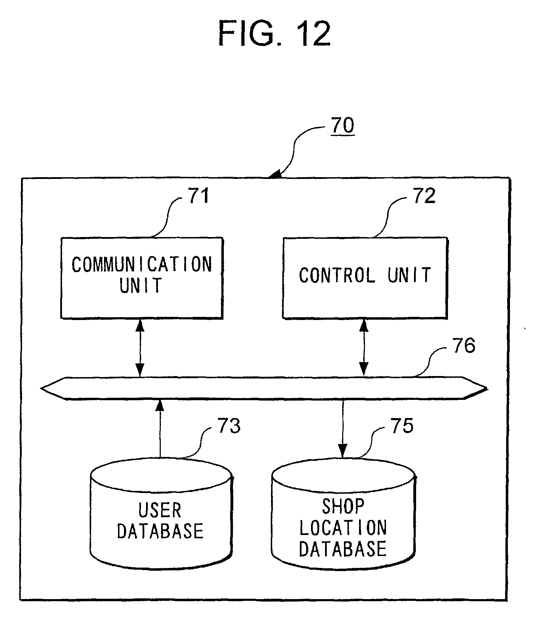

Fig.12 is the block diagram showing the configuration of location matching server 70 in the second embodiment. In the same figure, explanations regarding the identical structure elements to location matching server 70 in the first embodiment denoted in Fig.4 will be omitted, and like elements will be denoted by like symbols used in Fig.4.

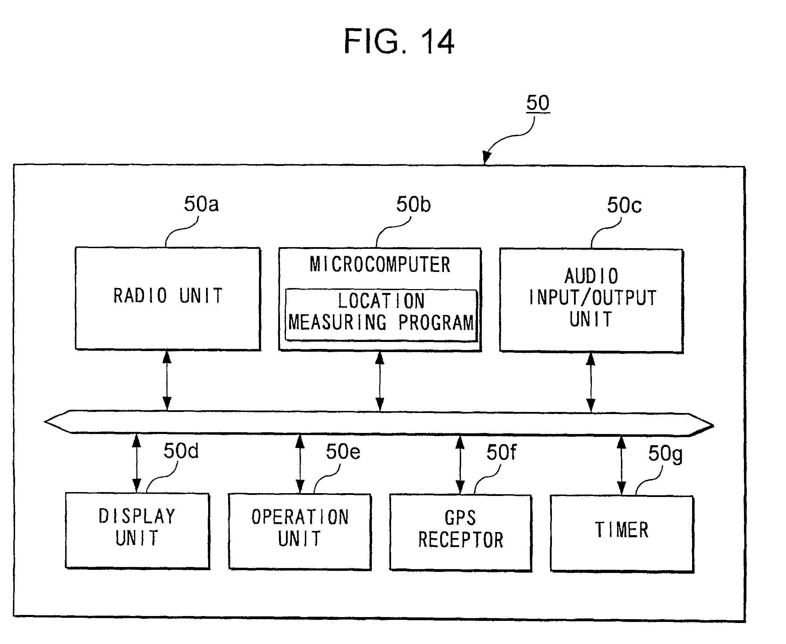

The second embodiment denoted in Fig.12 is different from the first embodiment in Fig.14 in that it is not equipped with location registration database 74. This is because location registration data is unnecessary since the location of mobile station 50 is detected by utilizing the location detection request signal which is transmitted from mobile station 50 as mentioned above.

Also, mobile station 50 of the second embodiment is different from the first embodiment in that the microcomputer of mobile station 50, which is not shown, generates the location detection request signal by user's operation, and the program is equipped to transmits this to location matching server 70.

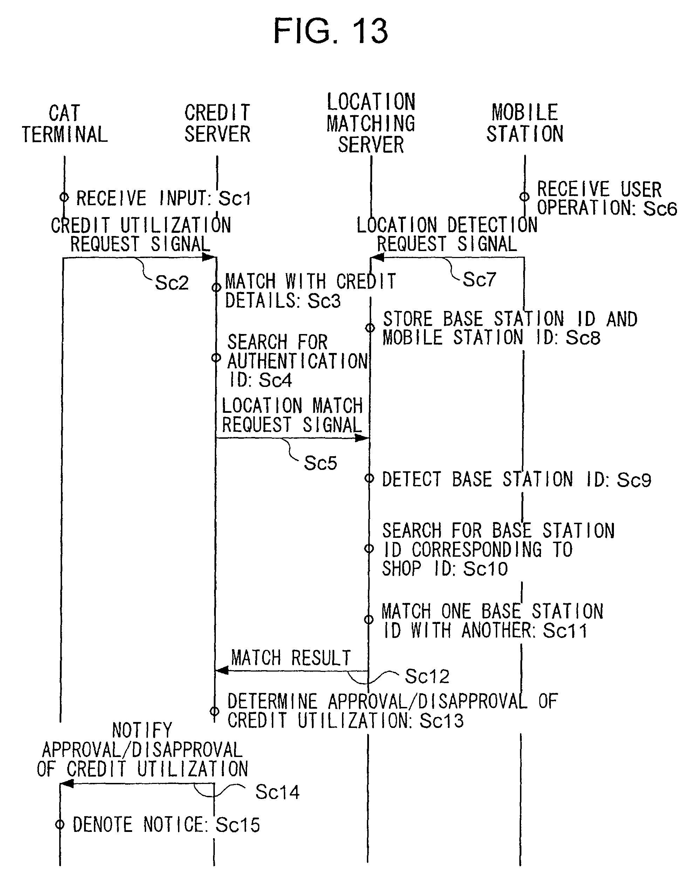

Next, operations of the second embodiment are explained referring to the sequence denoted in Fig.13.

The second embodiment denoted in Fig.13 is different from the first embodiment denoted in Fig.9 in that Steps Sc 6∼Sc 8 are performed as the new processes, and Step Sc 9 is performed instead of Steps Sa 6∼9 of the first embodiment.

Mobile station 50 accepts the input operation for location detection by user at Step Sc 6 denoted in Fig.13. This operation can be executed, for instance, by having the user press numeric pads equipped on the operation unit of mobile station 50 to input the specified numbers which stand for the command for location detection or equipping the exclusive key for location detection which the user presses on the operation unit.

Once the operations mentioned above are accepted, the process moves to Step Sc 7, and mobile station 50 transmits the location detection request signal which contains the mobile station ID of its own and requests location detection to location matching server 70. Then location matching server 70 receives this request signal with the base station ID of base station 61 which relayed this location detection request signal attached, as mentioned above.

Then location matching server 70 abstracts the mobile station ID and the base station ID from the received location detection request signal and stores these within the designated area of the memory which is not denoted at Step Sc 8.

After location matching server 70 receives the location match request signal at Step Sc 5, it proceeds to Step Sc 9, and the base station ID stored in the above mentioned fashion is read out. The base station ID read out is utilized for matching with the location of the transaction-shop at Step Sc 11.

Step Sc 8 has already been executed when Step Sc 5; namely, when location matching server 70 receives the location match request signal from credit server 30 was executed, and location matching server 70 determined the location of mobile station 50 by this. However, the process is not necessarily executed in this order. In other words, the processes of Steps Sc 6∼Sc 8 are event processes corresponding to the user's operation; therefore, there could be a case when the processes Sc 6∼Sc 8 are executed after the process of Step Sc 5 has been executed. In this case, location matching server 70 waits until the location detection request signal is stored at Step Sc 8 after receiving the location match request signal and storing it at Step Sc 5. In any case, location matching server 70 proceeds to the process of the next Step Sc 9 as the processes of both Step Sc 6∼Sc 8 and Step Sc 5 have been executed.

In the second embodiment, the location detection processes are executed by a user's operation to request location detection. Hence, location information regarding the user will not be notified to. the network without the user's intent.

### [1.3]Third Embodiment

Next, the third embodiment of the present invention will be explained.

Mobile station 50 detects the location of its own utilizing GPS (Global Positioning System) in the third embodiment.

Fig.14 is a block diagram showing the configuration of mobile station 50 in the third embodiment.

The third embodiment denoted in this figure is different from the first embodiment in that GPS receptor 50f and timer 50g are equipped, plus location measuring program is stored in the memory which is not denoted within microcomputer 50b.

GPS receptor 50f comprises an antenna and a reception circuit, and radio waves transmitted from GPS satellite which is not denoted are received.

Location measuring program stored in the memory is the program to calculate the latitude and the longitude which show the location of mobile station 50 based upon the data contained in the radio waves which GPS receptor 50f receives. Microcomputer 50b detects the location of mobile station 50 by activating this location measuring program after receiving radio waves from GPS satellite by activating GPS receptor 50f. In this case, timer 50g is utilized to keep track of the time when radio waves are received by GPS receptor 50f.

Also, location matching server 70 in the third embodiment is not equipped with location registration database 74 as the second embodiment denoted in Fig.10 because the location registration data is unnecessary since mobile station 50 detects the location of its own by GPS as mentioned above.

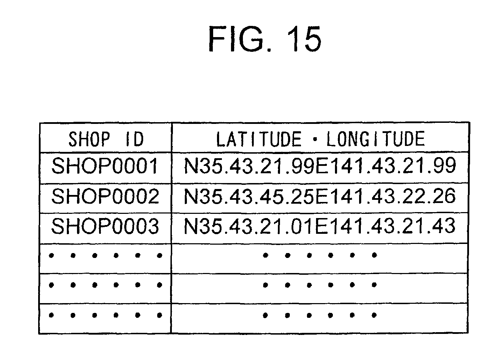

Also, shop location database 75 of location matching server 70 stores the latitude and longitude data which corresponds to the shop ID to indicate the shop location denoted by this particular shop ID as denoted in Fig.15 because the location calculated by mobile station 50 is expressed in latitude and longitude as mentioned above, and the identical expressions need to be utilized to match the location of this mobile station 50 with the location of the shop.

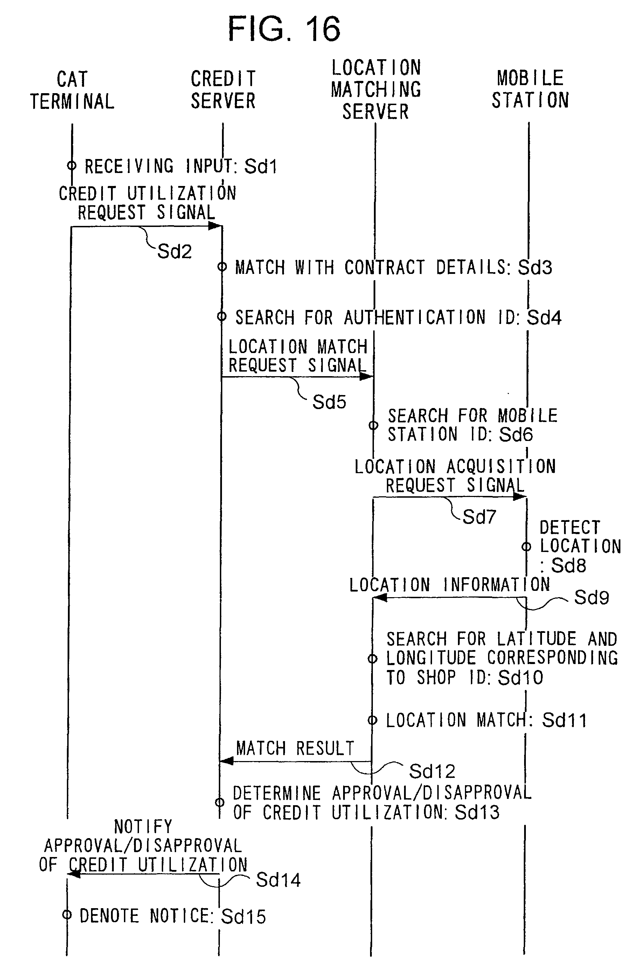

Next, the operations of the third embodiment will be explained referring to the sequence denoted in Fig.16.

The third embodiment denoted in Fig.16 is different from the first embodiment denoted in Fig.9 in that Steps Sd 7∼Sd 11 are performed instead of Steps Sa 7∼Sa 12.

First of all, location matching server 70 calls mobile station 50 specified by credit server 30 by utilizing the control channel and transmits the location acquisition request signal to request the location. In calling mobile station 50, location matching server 70 utilizes a telephone number of mobile station 50, but this can be determined by referring to the numeral part following "MS" of the mobile station ID denoting mobile station 50, which is the object of location detection.

Then mobile station 50 receives radio waves transmitted from at least three GPS satellites by activating GPS receptor 50f and generates the location information on mobile station 50 based upon the above mentioned radio wave by activating location measuring program at Step Sd 8. More specifically, the identification information on each GPS satellite and the time when these particular radio waves were transmitted are contained in the radio waves transmitted from GPS satellite. Mobile station 50 keeps track of the time when these radio waves were received by utilizing timer 50g and calculates the distance between GPS satellite which transmitted these particular radio waves and mobile station 50 from the difference between the time when these particular radio waves were transmitted and the time of their reception. Processes like these are executed for radio waves transmitted from at least 3 GPS satellites, and the distance between these GPS satellites and the radio waves which were transmitted is calculated by this. On the other hand, the location information is taken into account by. calculating the latitude and longitude of the location apart by each calculated distance from the existing locations of each GPS satellite since the existing locations of each GPS location are already known.

The process moves to Step Sd 9 after the location information on mobile station 50 was generated, and mobile station 50 transmits the generated location information to location matching server 70.

On the other hand, location matching server 70 looks up the shop ID which has been received from credit server 30 as the key in shop location database 75 and obtains the corresponding data regarding the latitude and longitude at Step Sd 10.

Then location matching server 70 matches the location information expressed in latitude and longitude which was received from mobile station 50 with latitude and longitude data obtained by looking up in shop location database 75 in Step Sd 11. An error can occur as a result of GPS calibration during this process; therefore, if the distance between the location of mobile station 50 and the shop location is within the tolerable error range, they are regarded as in accord.

Thus, the precision of location detection improves because of GPS in the third embodiment, and the precision of user authentication improves as well since the precision of location match improves by this.

### [1.4] Fourth Embodiment

Next, the fourth embodiment of the present invention will be explained.

Portable CAT terminal 21 which can be carried by clerk or loaded onto a business vehicle is utilized in the fourth embodiment without utilizing CAT terminal 20 which is installed in the shop on a fixed basis. In other words, location matching server 70 detects not only the location of mobile station 50 carried by the user but also the location of portable CAT terminal 21 then matches with the locations of each other.

First of all, the configuration of the fourth embodiment will be explained.

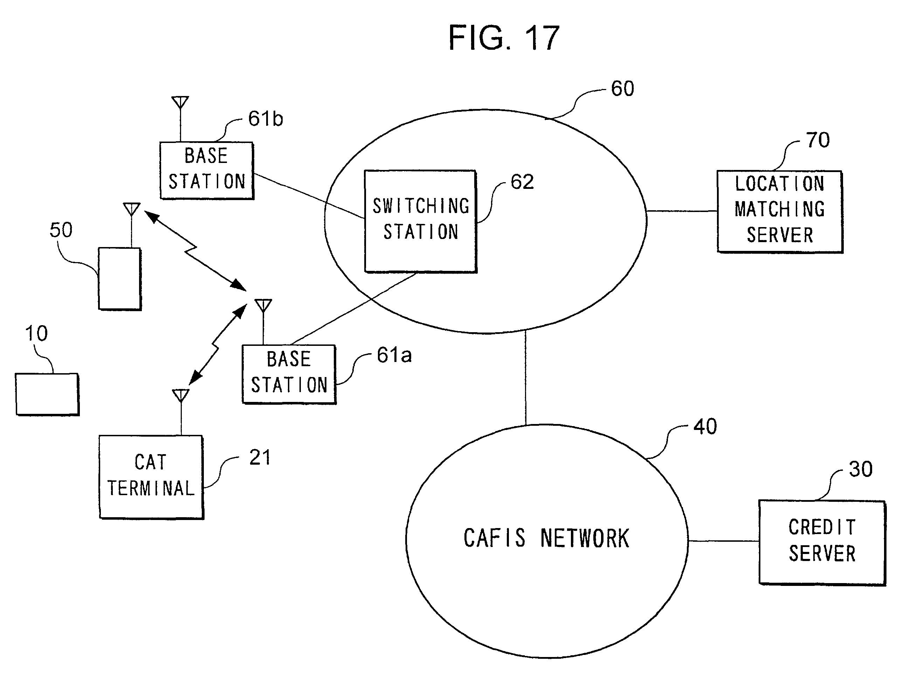

Fig.17 is a block diagram showing the configuration of the entire system of the fourth embodiment.

The fourth embodiment denoted in this figure is different from the first embodiment denoted in Fig.1 in that CAT terminal 21 is stored within mobile telephone network 60. CAT terminal 21 is equipped with a radio communication function, as will be explained later, and performs data communication with credit server 30 via mobile telephone network 60 and CAFIS network 40 by performing radio communication with base station 61.

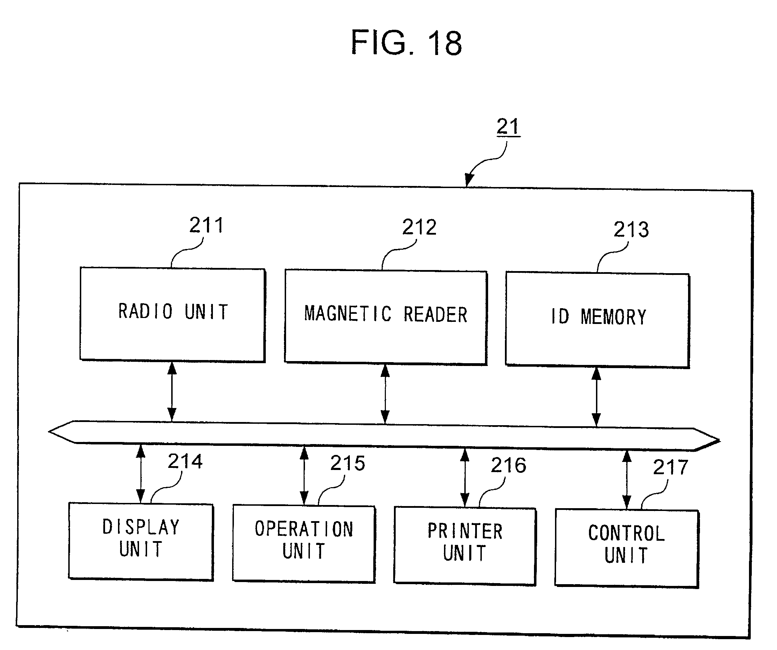

Fig.18 is a block figure showing the configuration of CAT terminal 21.

CAT terminal 21 denoted in this figure is different from the first embodiment in that radio part 211 is equipped instead of the communication part connected with CAFIS network 40 by cable. This radio part 211 performs radio communication with base station 61 of cellular telephone network 60.

Also, ID memory 213 stores identification information (referred to as terminal ID hereinafter) to specify each CAT terminal 21 instead of the shop ID. This terminal ID is utilized to detect the location of CAT terminal 21.

Location matching server 70 in the fourth embodiment is not equipped with shop location database 75 as the first embodiment because what location matching server 70 detects is not a shop whose location is fixed but the location of mobile CAT terminal 21; therefore, shop location database 75 is unnecessary.

The mechanism of location matching server 70 for detecting the location of CAT terminal 21 is as follows.

Cat terminal 21 transmits the credit utilization request signal containing the terminal ID of its own to credit server 30 after accepting the credit utilization request by user. This credit utilization request signal is received by base station 61 first after being transmitted from mobile station 50, but base station 61 forwards the received credit utilization request signal after adding the base station ID of its own to credit server 30 during this process. The base station ID of base station 61 which forms the radio cell in which this terminal 21 exists will be contained in the credit utilization request signal in addition to the terminal ID of CAT terminal 21 by this.

This terminal ID and the base station ID, as will be described later, are forwarded to location matching server 70 from credit server 30. Hence, location matching server 70 can determine which CAT terminal 21 exists within the radio cell of which base station 61 by referring to these terminal IDs and base station IDs. CAT terminal 21 determines this by executing the control program.

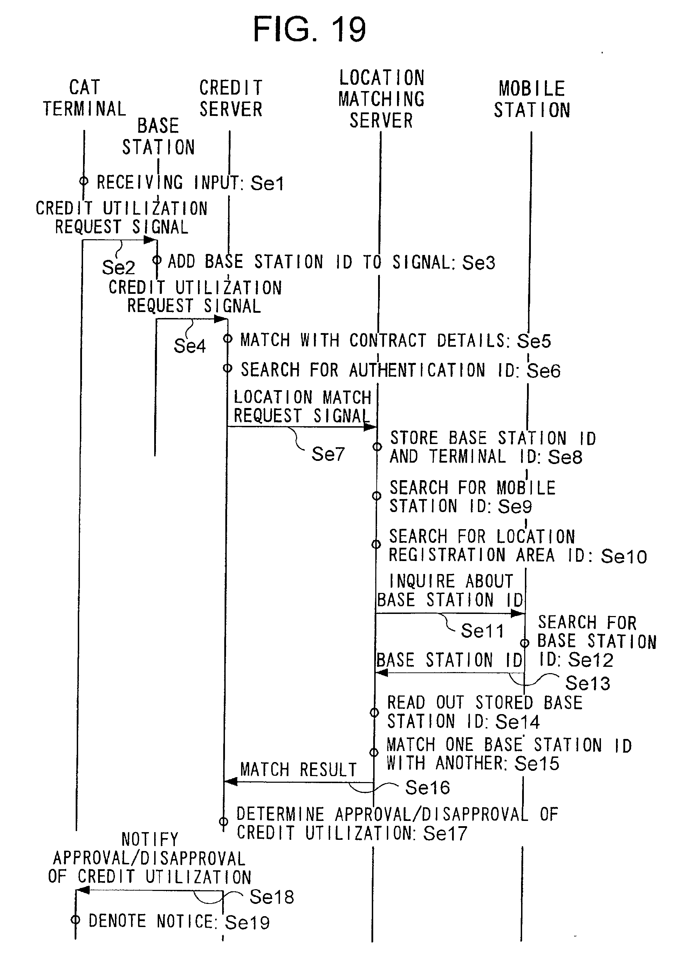

Next, the operations of the fourth embodiments will be explained by referring to the sequence denoted in Fig.19. The fourth embodiment denoted in this figure is different from the first embodiment denoted in Fig.9 in that Steps Se 2∼Se 4 are executed instead of Step Sa 2, and Step Se 14 is executed instead of Step Sa 11.

In other words, base station 61 first receives this credit utilization request signal after CAT terminal 21 transmits the credit utilization request signal to credit server 30. This credit utilization request signal contains the terminal ID of CAT terminal 21 as mentioned above.

Then base station 61 adds the base station ID stored within itself to the received credit utilization request signal in Step Se 3.

Then base station 61 transmits the credit utilization request signal to which the base station ID was added to the credit server 30 via mobile telephone network 60 and CAFIS network 40, then credit server 30 receives this in Step Se 4.

Also, though credit server 30 transmits the location match request signal to location matching server 70, the location match request signal is transmitted along with the terminal ID contained in the credit utilization request signal received in Step Se 4 and the base station ID during this process in Step Se 7.

On the other hand, once location matching server 70 receives the location match request signal, it abstracts the terminal ID contained in the location match request signal and the base station ID, and stores these as corresponding to each other in the memory which is not denoted in Step Se 8. The terminal ID and the base station ID stored during this process are read out by location matching server 70 and matched with the base station ID denoting the location of mobile station 50 in Step Se 14.

The location can be detected even if CAT terminal 21 moves around in the fourth embodiment; hence, user authentication can be done by location match of CAT terminal 21 and mobile station 50.

### [1.5] Fifth Embodiment

Next, the fifth embodiment of the present invention will be explained.

The purpose of the fifth embodiment is user authentication when mobile 50 stores electronic money, and the user makes purchases by utilizing electronic money.

When electronic money is utilized, its owner must be specified. For instance, the owner of electronic money is specified by storing the identification information of electronic money and its owner as a pair within mobile station 50.

However, if a third person with fraudulent intent obtains the identification information of the proper owner and the balance of the electronic money which that proper owner has, there is a possibility of that person being able to utilize the electronic money by pretending to be the proper owner. User authentication is executed so as to prevent this type of misuse beforehand in the fifth embodiment.

First of all, the configuration of the fifth embodiment will be explained.

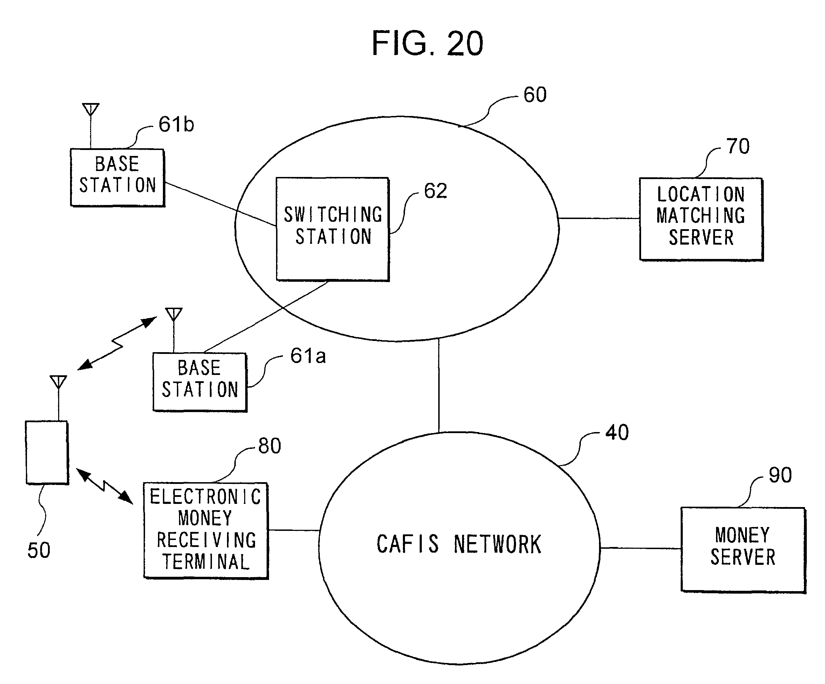

Fig.20 is the block diagram showing the configuration of the entire system of the fifth embodiment. With regard to the identical configuration elements to the first embodiment in this figure, explanations will be omitted by putting the same marks as Fig.1.

The fifth embodiment denoted in this figure is different from the first embodiment in that electronic money receiving terminal 80 is equipped instead of CAT terminal 20, and money server 90 is equipped instead of credit server 30. Also, the user utilizes electronic money which is stored within mobile station 50; hence, he does not have to possess credit card 10 as in the first embodiment.

Electronic money receiving terminal 80 is a communication terminal which is installed in each shop and is connected with CAFIS network. This electronic money receiving terminal 80 comprises the communication unit to perform data communication with location matching server 70 via CAFIS network 40 and mobile telephone network 60, the ID memory which stores the shop ID of the shop in which it is installed, the operation unit for a clerk to operate it, the display unit to denote several types of messages, the infrared communication unit for electronic money data to be transmitted to and be received from mobile station 50 by infrared and the control unit to control these. The clerk sells the goods by confirming that electronic money receiving terminal 80 has accepted the proper amount of electric money for the goods from mobile station 50.

Money server 31 is the server which is installed in the bank where the user has the account and is equipped with the function to keep track of the account balance and the balance of the electronic money stored within mobile station 50.

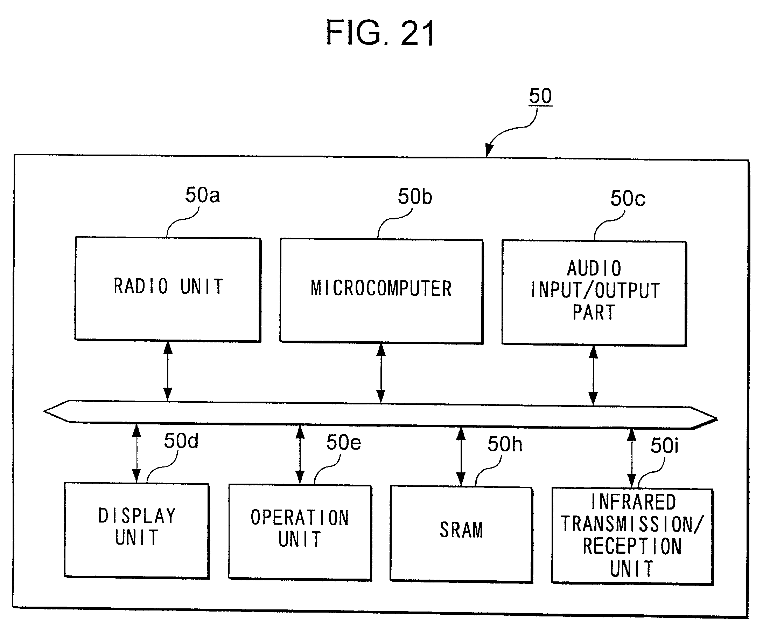

Next, the configuration of mobile station 50 in the fifth embodiment will be explained by referring to Fig.21.

The fifth embodiment in this figure is different from the first embodiment in that it comprises SRAM (Static Random Access Memory) 50h which stores electronic money by receiving electric supply from the back up electric current source which is not denoted and infrared transceiver 50i which transmits and receives infrared signals corresponding to data denoting electronic money.

The electronic money stored in SRAM 50h, as will be described later on, is transmitted from location matching server. 70 via mobile telephone network 60.

The purpose of infrared transceiver 50i is to perform radio communication with electronic money receiving terminal 80 mentioned above in accordance with, for instance, IrDA, Home RF (Home Radio Frequency), Blue Tooth (registered trademark) and so forth.

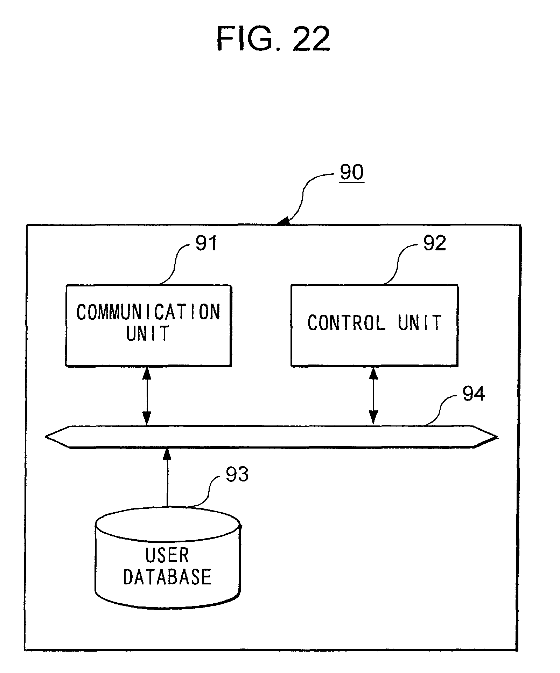

Next, the configuration of money server 90 will be explained by referring to Fig.22.

Money server 90 comprises communication unit 91, control unit 92, user database 93 and bus 94 which interconnects these as denoted in this figure.

Communication unit 91 comprises the connecting interface with CAFIS network 40 and the communication control circuit. This communication unit 91 performs data communication with location matching server 70 and mobile station 50 via CAFIS network 40 and mobile telephone network 60.

Control unit 92 comprises CPU, ROM and RAM, and controls the entire money server 90

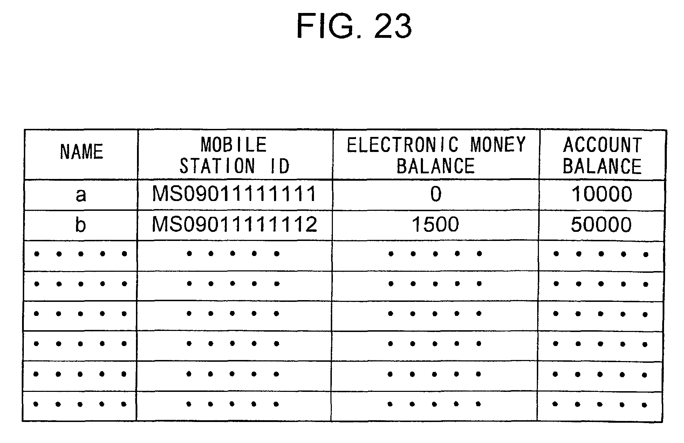

Each user's "name", "mobile station ID" of mobile station 50 possessed by one particular user, "balance of electronic money" stored in that mobile station 50 and "account balance" of that user are stored as corresponding to each other in user database 93 as denoted in the format diagram in Fig.23.

Control unit 92 keeps track of the balance of electronic money corresponding to each user and the account balance by referring to this user database 93.

Next, the operations of the fifth embodiment of the above mentioned configuration will be explained in order of (1) Issue of Electronic Money and (2) Utilization of Electronic Money.

### (1) Issue of Electronic Money

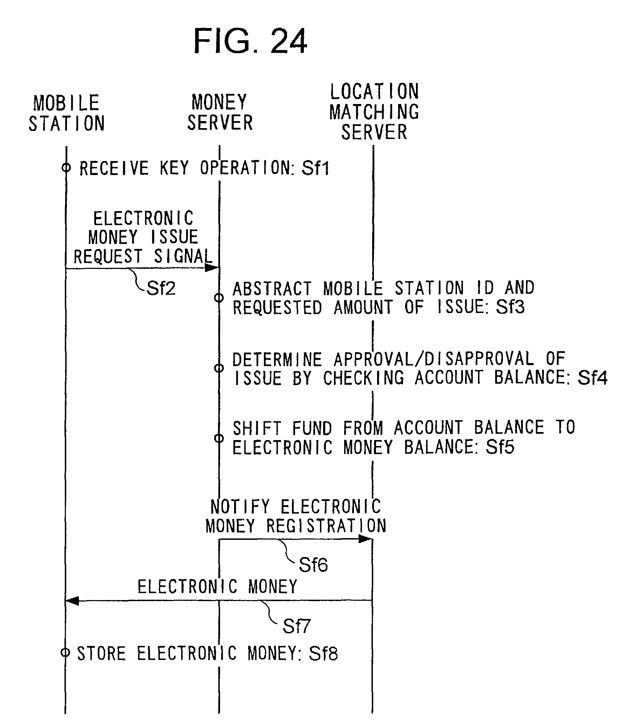

The operation will be explained by example of issuing electronic money of ¥1,000 to mobile station 50 corresponding to the mobile station ID "MS09011111111" by referring to the sequence denoted in Fig.24 hereafter.

First of all, the user performs the key operations to request the issue of electronic money of ¥1,000 by utilizing operation unit 50e of mobile station 50. For instance, operation unit 50e is equipped with the exclusive key to prompt the issue of electronic money, and the user inputs the number "1,000" by pressing numeric pads after pressing this exclusive key. Mobile station 50 accepts the above mentioned key operations in response to this (Step Sf 1).

Then mobile station 50 calls money server 90 and transmits the request signal for the issue of electronic money (Step Sf 2). The mobile station ID "MS09011111111" of mobile station 50 and the data denoting the requested amount of issue for electronic money of "¥1,000" are contained in this request signal.

On the other hand, money server 90 abstracts the mobile station ID "MS09011111111" and the requested amount of issue for electronic money of "¥1,000" from this request signal after it has received the issue request signal for electronic money (Step Sf 3).

Then money server 90 looks up the abstracted mobile ID "MS09011111111" as the key in user database 93 and determines whether electronic money can be issued or not by confirming if the account balance corresponding to this particular ID is equal to or above the requested amount of issue for electronic money (Step Sf 4). In this case, the account balance corresponding to the mobile station ID "MS09011111111" is "¥10,000", and since it is above "¥1,000" which is the requested amount of issue for electronic money, it is determined that electronic money can be issued.

Then while money server 90 subtracts "¥1,000" which is the requested amount of issue for electronic money from "¥10,000" which is the account balance, it adds this "¥1,000" to the electronic money balance (Step Sf 5). The account balance in user database 93 denoted in Fig.23 is changed from "¥1,0000" to "¥9,000", and the electronic money balance is changed from "¥0" to "¥1,000" by this.

Then money server 90 transmits the electronic money registration notice regarding the electronic money of "¥1,000" which was registered with the mobile station 50 denoted by mobile station ID "MS09011111111" to location matching server 70 (Step Sf 6).

Location matching server 70 transmits the data denoting the electronic money of "¥1,000" to the mobile station 50 denoted by mobile station ID "MS09011111111" as it receives the electronic money registration notice (Step Sf 7).

Then after mobile station 50 received the data denoting the electronic money of "¥1,000", it stores the data in SRAM 50h, then the process terminates.

It was determined that electronic money could be issued in Step Sf 4 in the above example, but if it is determined that electronic money cannot be issued due to lack of fund, money server 90 notifies mobile station 50 that electronic money cannot be issued, then the process terminates.

### (2) Utilization of Electronic Money

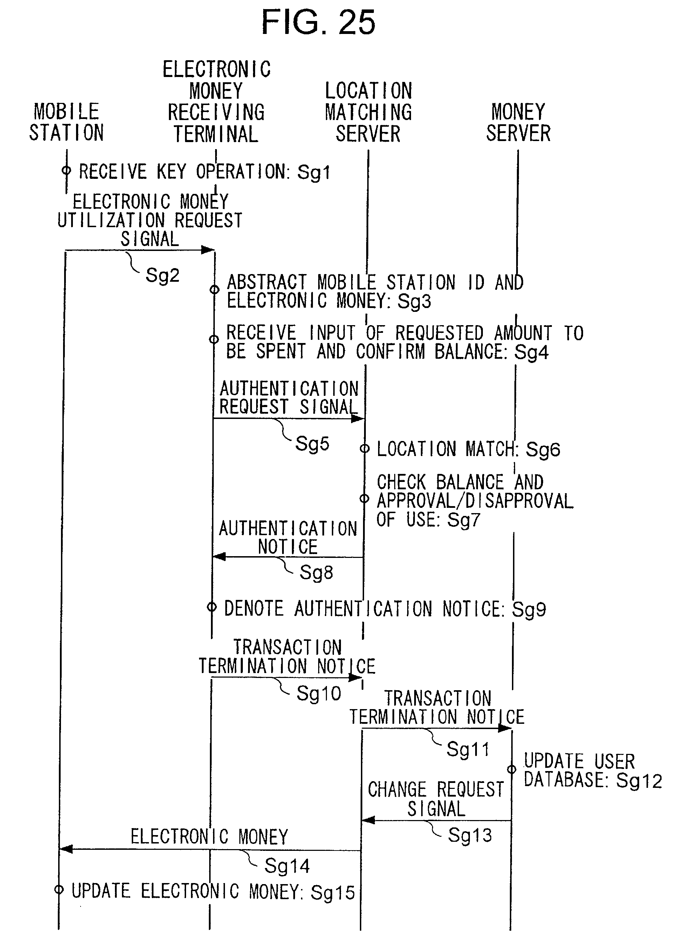

Next, the operations of purchasing goods by spending ¥100 out of the electronic money of "¥1,000" stored in mobile station 50 will be explained by referring to the sequence denoted in Fig.25.

First of all, the user performs the key operation to spend electronic money by utilizing operation unit 50e of mobile station 50 at the shop corresponding to the shop ID "SHOP001." For instance, operation unit 50e is equipped with the exclusive key to prompt the utilization of electronic money, and the user presses this exclusive key. Mobile station 50 accepts the key operation of the user in response to this (Step Sg 1).

Then mobile station 50 transmits the request signal for electronic money utilization from infrared transceiver 50i to electronic money receiving terminal 80 (Step Sg 2). This request signal for electronic money utilization contains the mobile station ID "MS09011111111" of mobile station 50 and the data denoting the electronic money balance "¥1,000" which is stored in SRAM 50h.

Electronic money receiving terminal 80 abstracts the mobile station ID "MS09011111111" and the electronic money balance "¥1,000" from the received request signal for electronic money utilization (Step Sg 3).

Then as the requested amount "¥100" for electronic money utilization is fed into electronic money receiving terminal 80 by the clerk, electronic money receiving terminal 80 accepts this input operation. Electronic money receiving terminal 80 confirms whether the requested amount for electronic money utilization is below or equal to the electronic money balance during this process (Step Sg 4).

Then electronic money receiving terminal 80 transmits the authentication request signal to request the authentication of the user who is wishing to utilize electronic money to location matching server 70 (Step Sg 5). This authentication request signal contains the mobile station ID "MS09011111111" and the electronic money balance "¥1,000" which were abstracted in Step Sg 3, and the shop ID "SHOP001" of the ID memory.

The requested amount for electronic money utilization is contained in the authentication request signal during this process because whether the requested amount for electronic money utilization is below or equal to the electronic money balance or not should be confirmed by location matching server 70. Although this has already been confirmed by electronic money receiving terminal 80 in the above mentioned Step Sg 4, another confirmation is requested from location matching server 70 to make certain that the electronic money on the mobile station 50 side is not rewritten falsely.

Location matching server 70 matches the location of mobile station 50 with the location of the transaction-shop based upon the mobile station ID "MS09011111111" and the shop ID "SHOP001" like in the first embodiment after receiving the authentication request signal (Step Sg 6).

Specifically, location matching server 70 obtains the corresponding location registration area ID by abstracting the mobile station ID "M509011111111" from the authentication request signal and looking up this one as the key in location registration database 74. Furthermore, location matching server 70 obtains the base station ID of base station 61 which forms the radio cell in which mobile station 50 corresponding to the mobile station ID "MS09011111111" exists by accessing into switching station 62 corresponding to the obtained location registration area ID. Location matching server 70 obtains the corresponding base station ID by looking up the shop ID "SHOP001" which is contained in the authentication request signal as the key in shop location database 75 along with this process. Then location matching server 70 matches the base station ID received from switching station 62 with the base station ID obtained by looking it up in shop location database 75. At this point, it will be regarded as in accord by "BS001" as is the case in the first embodiment.

As the outcomes of location match accord, location matching server 70 determines whether the requested amount "¥100" for electronic money utilization is feasible or not by accessing into user database 93 of money server 90 (Step Sg 7). Specifically, location matching server 70 determines this based upon whether the electronic money balance corresponding to this particular ID is equal to or above the requested amount of utilization or not by looking up the mobile station ID "MS09011111111" as the key in user database 93 denoted in Fig.23. At this point, the electronic money balance is "¥1,000" which is above the requested amount "¥100" for utilization as denoted in Fig.23; therefore, it is regarded as feasible.

Then location matching server 70 transmits the authentication notice that the user authentication has been executed -to electronic money receiving terminal 80 (Step Sg 8).
This authentication notice contains the data denoting mobile station ID "09011111111" and the requested amount "¥100" for utilization.

On the other hand, as electronic money receiving terminal 80 receives the authentication notice, it denotes that matter on the display unit (Step Sg 9). The clerk sells goods by referring to this display unit and executes the operation to display the end of the transaction.

In response to this, electronic money receiving terminal 80 transmits the transaction termination notice to location matching server 70 (Step Sg 10). The transaction termination notice contains data denoting the mobile station ID "09011111111" and the utilized amount "¥100."

Location matching server 70 forwards the transaction termination notice to money server 90 after receiving it (Step Sg 11).

After money server 90 received the transaction termination notice, it renews the contents stored in user database 93 in response to this (Step Sg 12). Specifically, "¥100" is subtracted from the electronic money balance "¥1,000" corresponding to the mobile station ID "09011111111" within user database 93 denoted in Fig.23. The electronic money balance corresponding to the mobile station ID "09011111111" is changed to "¥900".

Then money server 90 transmits the change request signal which makes a request to change the electronic money balance corresponding to the mobile station ID "09011111111" to "¥900" to location matching server 70 (Step Sg 13).

Location matching server 70 transmits the data denoting the electronic money of "¥900" to mobile station 50 as it receives the change request signal (Step Sg 14).

Mobile station 50 rewrites the electronic money data of "¥1,000" stored in SRAM 50h to "¥900" and terminates the process after denoting this matter on display unit 50d (Step Sg 15).

The case when the outcome of location match accorded in Step Sg 6 was explained in the above example, but if they do not accord, location matching server 70 transmits a notice that the client might be false to electronic money receiving terminal 80, then the process terminates.

The case that electronic money utilization was feasible in Step Sg 7 was explained in the above example, but if it is determined that electronic money utilization is impossible for the lack of the electronic money balance, money server 90 notifies to electronic money receiving terminal 80 that electronic money cannot be utilized, then the process terminates.

User authentication is executed by detecting the location of mobile station 50 in which electronic money is stored and matching the location of this mobile station 50 with the location of the transaction-shop like this; therefore, it can be executed without imposing a burden on the user.

The above mentioned fifth embodiment can be applied to, for instance, electronic toll collection system (referred to as ETC hereafter).

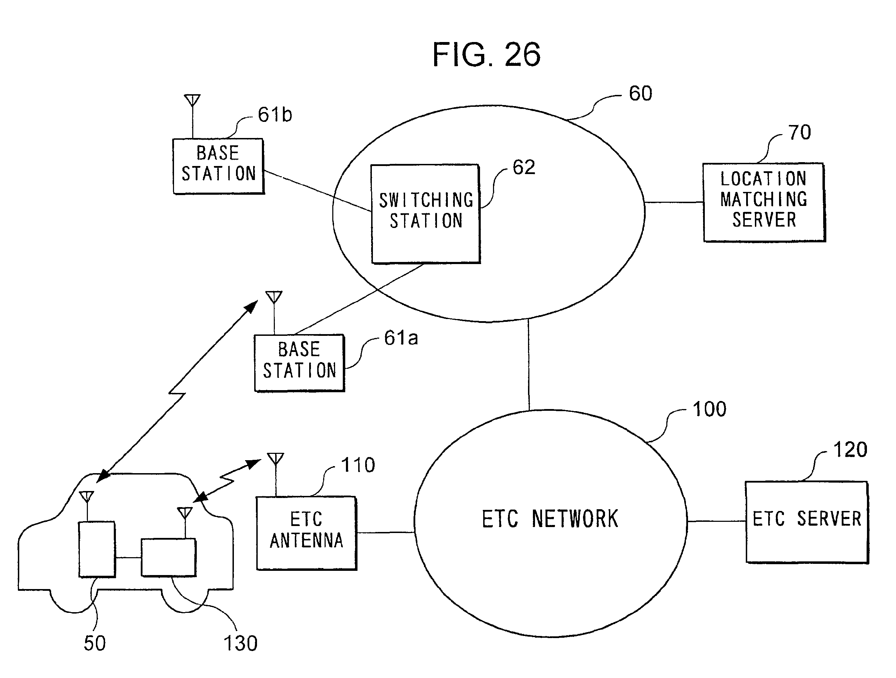

Fig.26 is a block diagram showing the configuration of the entire system when it is applied to ETC.

As denoted in this figure, this system comprises mobile station 50, mobile telephone network 60, location matching server 70, ETC antenna 110 installed in a toll gate, ETC module 130 loaded onto the car, ETC server 120 to keep track of the electronic money balance stored in mobile station 50, ETC antenna 110 for these plus ETC network 100 which stores ETC module 130 and ETC server 120, then the fee is paid by spending electronic money stored within mobile station 50 by radio communication between ETC antenna 110 and ETC module 130.

In other words, ETC network 100 is utilized in this system instead of CAFIS network 40 denoted in Fig.20, ETC antenna 110 is utilized instead of electronic money receiving terminal 80 and ETC server 120 is utilized instead of money server 90.

Furthermore, ETC module 130 is utilized in Fig.26 instead of infrared transceiver 50i of mobile station 50 denoted in Fig.21. Communication between mobile station 50 denoted in Fig.26 and ETC module 130 can be performed by either cable or radio.

Authentication is executed in this type of configuration by matching the location of mobile station 50 with the location of ETC antenna 110 at the tollgate where the car loaded with mobile station 50 and ETC module 130 passed through.

### [1.6] Modifications

### (1) The Relationship between the Conventional Art and Embodiments

The authentication system by matching the location of mobile station 50 with the shop location (or CAT terminal 20) was adopted in the above mentioned first∼fifth embodiments instead of the conventional authentication system by signature and secret identification number. Yet in addition to the conventional authentication system, the authentication system by location match also can be carried out as well. In other words, the user who is requesting a transaction needs to input the signature and the pin number as usual, but furthermore, user authentication is executed by utilizing this mobile station 50.

The precision of authentication improves more by utilizing the conventional authentication system like this.

### (2) Content of Transaction Request by User

User authentication of the case when a credit card is used by CAT terminal 20 at the shop in the above mentioned first∼fourth embodiments was explained, but this is not so limited, and can also be applied, for instance, to user authentication for cashing service by utilizing CD (Cash Dispenser). Furthermore, it can be applied to user authentication of valuable cards or identification cards such as cash cards and debit cards besides credit cards.

Also, this is not necessarily limited to user authentication of a transaction by utilizing cards, but in short, the present invention can be adopted when user authentication is necessary in connection with the transaction request by user. For example, the present invention can be adopted even when cash is withdrawn at a bank window by bringing a bankbook. In this case, the operation terminal installed in the bank window is used instead of the above mentioned CAT terminal 20, the centralized computer to administer the fund shifting process within the above mentioned bank is utilized instead of credit server 30, and the business network to connect the above.mentioned operation terminal and the above mentioned centralized computer are used instead of CAFIS network 40. User authentication becomes possible by matching the location of mobile station 50 possessed by depositor with the location of the above mentioned operation terminal by this. The depositor no longer needs bring an identification seal; therefore, the chance of losing the seal which is an important item decreases.

### (3) Connection Mode of CAFIS Network 40 and Mobile Telephone Network 60

Communication connection between credit server 30 and location matching server 70 was possible by connecting CAFIS network 40 and mobile telephone network 60 in the first∼fifth embodiments. Yet the connection mode can be, for instance, direct connection between credit server 30 and location matching server 70 by exclusive line, but it is not so limited, and can be connected via other networks such as fixed telephone networks or internet.

### (4) Allocation of Function to Each Server

Credit server 30 and location matching server 70 were explained as separate devices in the first∼fourth embodiments, but they can be united as one configuration.

For instance, location matching server 70 can contain the functions of credit server 30 in the fourth embodiment. Since the entire location matching server 70 which contains the functions of mobile station 50, CAT terminal 21 and credit server 30 will be served in mobile telephone network 60 in this case, each of these devices can perform data communication via mobile telephone network 60. Therefore, CAFIS network 40 is unnecessary in this case. Also, instead of having mobile station ID database 73, location registration database 74 and shop location database 75 installed inside of location matching server 70, the configuration of having these installed outside of location matching server 70 is feasible too.

Also, allocation of function for money server 90 and location matching server 70 in the fifth embodiment can be chosen accordingly likewise.

### (5) Main Unit to Retain the Area Data

Switching station 62 retained the area data in the first embodiment, but it is not so limited, and a specific node within the network also can retain this. For instance, base station 61 can retain this, and location matching server 70 can inquire of every base station 61 contained within the location registration area in which mobile station 50 exists the area data.

Now, this will be the same in the fifth embodiment.

### (6) Variation of Location Detection of Portable CAT Terminal 21

The location of CAT terminal 21 was detected by utilizing the base station ID attached to the credit utilization request signal transmitted from CAT terminal 21 in the fourth embodiment; however, it is not so limited, and applying the same measure as the location detection of mobile station 50 in the first∼third embodiments to the location detection of CAT terminal 21 is possible too.

For instance, the network can initiate detection of the location of CAT terminal 21 similar to the network in detecting the location of mobile station 50 in the first embodiment. In other words, while location matching server 70 retains the location registration data of CAT terminal 21, and if switching station 62 retains the area data of CAT terminal 21, the location of CAT terminal 21 can be detected by this. Also, if CAT terminal 21 is served in the simplified cellular telephone network, and communication takes place via this network, location detection by utilizing the electric field strength of the signal transmitted from base station 61 like the second embodiment is possible as well.

Also, mobile station 50 includes location measuring function utilized by GPS as in the third embodiment, and likewise, including this measuring function by GPS in CAT terminal 21, and using this function to detect locations are similarly possible.

The CAT terminal served within mobile telephone network 60 does not necessarily have to be portable, but the CAT terminal which is installed on the fixed basis can have the radio function by which data communication takes place via mobile telephone network 60.

### (7) Variation of Location Detection by GPS

Also, mobile station 50 executed location detection by GPS in response to the location match request signal from location matching server 70 in the third embodiment. Yet it is not so limited, and mobile station 50 also can detect the location of its own by operating GPS receptor 50f in response to the key operations by user and transmits this to location matching server 70 like, for instance, in the second embodiment.

Also, mobile station 50 alone executed location detection by GPS in the third embodiment. Yet it is not so limited, and location detection can also be executed by GPS in cooperation with the specific nodes within mobile station 50 and mobile telephone network 60. Base station 61 and switching station 62, for instance, can be used as these specific nodes.

For instance, base station 61 is equipped with GPS correction unit which corrects the measured value of GPS by mobile station 50 by means of D-GPS while mobile station 50 is equipped with location detection measures such as GPS receptor 50 and location measuring program. In other words, as mobile station 50 transmits the measured value of GPS of its own to base station 61, GPS correction unit of base station 61 corrects the received measured value of GPS based upon the GPS calibration error of its own and transmits it to location matching server 70. The precision of location detection improves by correcting the measured value of GPS by D-GPS like this.

Also, mobile station 50 only is equipped with the function to receive radio waves transmitted from GPS satellite, and the calculation process to determine the location based upon the received radio waves can be executed by the network. In other words, mobile station 50 abstracts the data contained in these particular radio waves, namely the identification information of GPS satellite and the time when the radio waves were transmitted as it receives the radio waves transmitted from GPS satellite and forwards this to base station 61 after adding the time when these particular radio waves were received. Base station 61 determines the location of this mobile station 50 based upon the data received form the mobile station 50. The burden of processes upon mobile station 50 can be decreased by this.

The above mentioned GPS variation of course can be adopted when GPS is loaded onto CAT terminal 21 in the fourth embodiment.

### (8) IDs Cat Terminals Stores

Now, Cat terminal 20 stored shop IDs to identify the shop in the first∼third embodiments, and these IDs were used as the search key to search for the location of CAT terminal 20. Hence, when a plurality of CAT terminals 20 are installed in one shop, these CAT terminals 20 store the identical shop ID.

However, CAT terminal 20 can store specific terminal IDs within each CAT terminal 21 as mentioned in the fourth embodiment and detect the location of CAT terminal 20 by utilizing this instead of this type of shop ID. In this case, location matching server 70 retains the location information corresponding to each terminal ID.

In short, the identification information CAT terminal 20 stores just have to be the identification information attached to CAT terminal 20 to detect its location, and it does not matter whether it is specific to the shop or the CAT terminal.

Now, this is the same with the electronic money receiving terminal 80 in the fifth embodiment.

### (9) Communication Modes between Mobile Stations and Electronic Money Receiving Terminal

Radio communication took place between mobile station 50 and electronic money receiving terminal 80 by utilizing infrared in the fifth embodiment, but it is not so limited, and cable communication is possible too. For instance, although mobile station 50 is equipped with a connector for 16 pins for input/output of serial signals in general, data communication can be performed by installing the same thing as this in electronic money receiving terminal 80 and interconnecting these connectors by cable.

### (10) Variation of Location Detection in the Fifth Embodiment

Location match in the fifth embodiment was executed in the same way as the first embodiment, but it is not so limited, and location match also can be carried out in the same way as the second∼third embodiments. Also, electronic money receiving terminal 80 can be portable; in which case, location match is executed in the same way as the fourth embodiment.

### (11) Data Stored in Mobile Station 50 in the Fifth Embodiment

An example of storing electronic money in mobile station 50 was explained in the fifth embodiment, but it is not so limited, and for instance, storing the necessary data to utilize credit in mobile station 50 and user authentication as the object when this is used are possible as well.

In this case, what stored in money server 90 is not the electronic money balance but the possible credit amount to be spent.

### (12) Program and the Software Media It Is Recorded on

Every process of location matching server 70 (Fig.1 and so forth), credit server 30 (Fig.1 and so forth), money server 90 (Gig.20) and ETC server 120 (Fig.26) which is used in the present invention can be the program to be executed on a computer, and every program can be recorded on data recording media from which the computer can read.

### [2] Effects of Embodiment

Authentication is executed by detecting the location of the receiving terminal which the transaction request was accepted plus the location of the mobile communication terminal the client possesses and matching these, authentication without imposing a burden on the customer can be carried out.

Also, the present invention can be adopted in addition to the conventional authentication, and the precision of authentication can thereby be improved.

## Claims

1. An authentication system comprising:
a plurality of receiving terminals for receiving a transaction request from a user;
a mobile communication network for serving a plurality of mobile communication terminals;
a first location memory storage device for storing a location of each of said plurality of terminals;
a second location memory storage device for storing a location of each of said plurality of mobile communication terminals;
a matching device for obtaining from said first location memory storage device a location of a receiving terminal which has received a transaction request, and for obtaining from said second location memory storage device a location of a mobile communication terminal, transmitting the transaction request, and matching each of said locations; and
an authentication device for determining a validity of said transaction request based upon a result obtained by said matching device upon comparing said locations.

2. An authentication system according to Claim 1,
wherein said mobile communication terminal carried by the user who has transmitted said transaction request is identified by identification information contained in said transaction request.

3. An authentication system according to Claim 1,
wherein said mobile communication network is a cellular network including a plurality of base stations; and
said second location storing device obtains a location of said mobile communication terminal by detecting a base station located near said mobile communication terminal.

4. An authentication system according to Claims 1,
wherein said second location storing device obtains a location of said mobile communication terminal based upon radio waves transmitted from a satellite.

5. An authentication system according to Claim 3 or 4,
wherein the obtaining operation of a location of said mobile communication terminal by said second location storing device is initiated when said user operates said mobile communication terminal.

6. An authentication system according to any one of Claims 1 to 4,
wherein said receiving terminal is a communication terminal served by another communication network connected to said mobile communication network; and
wherein, while said matching device is installed in said mobile communication network, said authentication device is installed in said another communication network.

7. An authentication system according to any one of Claims 1 to 4,
wherein said receiving terminal is a second mobile communication terminal served by said mobile communication network; and
wherein said first location storing device obtains a location of said receiving terminal for storage by detecting a base station located near said receiving terminal.

8. An authentication system according to any one of Claims 1 to 4,
wherein said receiving terminal is a second mobile communication terminal served by said mobile communication network; and
wherein said first location storing device obtains a location of said receiving terminal for storage based upon radio waves transmitted from a satellite.

9. An authentication system comprising:
a plurality of receiving terminals for receiving a transaction request by reading, from an identification card storing identification information of a user, identification information of the user;
a first location storing device for storing location information of each receiving terminal and identification information of each of said receiving terminals as corresponding to each other;
a second location storing device for storing location information of a mobile communication terminal of each user and identification information of each of said user as corresponding to each other;
a matching device for matching location information of said receiving terminal with location information of a mobile communication terminal, location information of said receiving terminal being read out as a key which is identification information of an receiving terminal which received said transaction request from said first location memory device read out as a key which is identification information of a user who transmitted said transaction request from said second location memory device;
an authentication device for determining authenticity of said user based upon a match result by said matching device.

10. An authentication system according to claim 9, it further comprising a database for retaining amount data indicating an amount available for said user in correspondence with said identification information regarding said user;
wherein while said mobile communication terminal comprises a memory for storing the identification information regarding said user and a first communication interface for performing communication with said receiving terminal, said receiving terminal comprises a second communication interface for performing radio communication with said first communication interface of said mobile communication terminal;
said mobile communication terminal transmits said identification information read out from said memory via said first communication interface;
said receiving terminal receives said identification information via said second communication interface and transmits it to said authentication device;
said authentication device determines authenticity of said user by referring to a transaction amount required for said transaction request and amount data stored in said database in correspondence with said received identification information in addition to a match result given by said matching device.

11. An authentication system according to claim 10,
wherein said mobile communication terminal stores amount data denoting an amount available for said user and transmits it together with said identification information read out from said memory via said first communication interface; and
said receiving terminal determines authenticity of said user by referring to a transaction amount required for said transaction request and said amount data transmitted from said mobile communication terminal.

12. An authentication system according to claim 10,
wherein said first communication interface and said second communication interface perform radio communication.

13. An authentication system according to Claim 1,
wherein said mobile communication terminal is a cellular telephone.

14. An authentication system according to Claim 9,
wherein said mobile communication terminal is a cellular telephone.

15. An authentication method for determining authenticity of a user who possesses a mobile communication terminal served in a mobile communication network, the method comprising:
a step of receiving a transaction request from a user at each receiving terminal;
a first location finding step for finding a location of an receiving terminal which has received said transaction request;
a second location finding step for finding a location of a mobile communication terminal which should be possessed by a user who transmitted said transaction request;
a step for matching the location of said receiving terminal found by said first location finding step with the location of said mobile communication terminal found by said second location finding step; and
a step for determining authenticity of a transaction request based upon a result given by said matching step.

16. The authentication method according to Claim 15,
wherein a mobile communication terminal possessed by a user who transmits said transaction request is identified by identification information contained in said transaction request.

17. The authentication method according to claim 15,
wherein said mobile communication network is a cellular network in which a plurality of base stations are placed; and
said second location finding step finds a location of said mobile communication terminal by detecting said mobile station located near said mobile communication terminal.

18. The authentication method according to claim 17, further comprising a step of receiving an operation to request a location detection of said mobile communication terminal by said user at said mobile communication terminal;
wherein said step for finding a location of said mobile communication terminal is initiated by reception of said operation.

19. An authentication method for determining authenticity of a user who possesses a mobile communication terminal served in a mobile communication network, comprising: a step of receiving a transaction request at each receiving terminal by reading out identification information of this user from an ID card in which identification information of a user is stored;
a step of reading out location information of this receiving terminal based upon a key which is identification information of an receiving terminal which has received said transaction request from data which identification information of each receiving terminal has stored in relation to location information of said each receiving terminal beforehand;
a step of reading out location information of a mobile communication terminal which this user should possess based upon a key which is identification information of a user who has transmitted said transaction request from data in which identification information of each user has been stored in relation to location information of a mobile communication terminal beforehand;
a step of matching said location information of receiving terminal which was read out with said location information of a mobile communication terminal which was read out;
an authentication step of determining authenticity of said user based upon a result of said match.

20. The authentication method according to claim 19, further comprising:
a step of storing amount data indicating an amount available for said user in correspondence with said identification information on said user beforehand;
a step of transmitting in which said mobile communication terminal transmits identification information regarding said user to said receiving terminal;
a step of receiving in which said receiving terminal receives said identification information which was transmitted; and
wherein said authentication step determines authenticity of said user by referring to a transaction amount required for said transaction request and said amount data which is stored in correspondence with said identification information received by said receiving terminal in addition to said match result.

21. An authentication program for determining authenticity of transaction request by a user who possesses a mobile communication terminal served in a mobile communication network wherein a computer prompts the program to execute;
a first process of location finding for finding a location of said each receiving terminal which has received said transaction request when each receiving terminal has received a transaction request of a user;
a second location finding process for finding a location of a mobile communication terminal which a user who transmitted said transaction request should possess;
a match process for matching a location of said receiving terminal which was found by said first location finding process with a location of said mobile communication terminal found by said second location finding process; and
an authentication process for determining authenticity of said user based upon said match result.

22. An authentication program for determining authenticity of transaction by a user who possesses a mobile communication terminal served in a mobile communication network wherein a computer prompts the program to execute;
a process of reading out location information of this receiving terminal based upon a key which is identification information of an receiving terminal which has received said transaction request from data in which identification information of said each receiving terminal has been stored in correspondence with location information of said each receiving terminal beforehand when identification information of said each receiving terminal and said user have been obtained after each receiving terminal has received a transaction request from a user;
a process of reading out location information of a mobile communication terminal which this user should possess based upon a key which is identification information of a user who transmitted said transaction request from data in which identification information of each user has been stored in correspondence with location information of a mobile communication terminal beforehand;
a process for matching said location information of receiving terminal which was read out with said location information of a mobile communication terminal which was read out;
authentication process for determining authenticity of said user based upon said match result.

23. A computer-readable recording media storing the program claimed in Claim 21 or 22.
